Europäisches Patentamt

European Patent Office

Office européen des brevets

(19)

(11) EP 0 604 628 B1

(12) **FASCICULE DE BREVET EUROPEEN**

(45) Date de publication et mention
de la délivrance du brevet:
**26.02.1997 Bulletin 1997/09**

(21) Numéro de dépôt: **93916001.6**

(22) Date de dépôt: **15.07.1993**

(51) Int Cl.⁶: **G01L 1/22**

(86) Numéro de dépôt international:
**PCT/FR93/00721**

**WO 94/02815 (03.02.1994 Gazette 1994/04)**

(54) **Jauge de contrainte sur support souple et capteur muni de ladite jauge.**

Dehnungsmessstreifen auf weichem Träger und ausgerüstet mit dem genannten Messstreifen

Strain gage disposed on a flexible support and probe fitted with said gage

(84) Etats contractants désignés:
**DE FR GB IT NL**

(30) Priorité: **15.07.1992 FR 9208723**

(43) Date de publication de la demande:
**06.07.1994 Bulletin 1994/27**

(73) Titulaire: **COMMISSARIAT A L'ENERGIE
ATOMIQUE
75752 Paris Cédex 15 (FR)**

(72) Inventeurs:
• **GRANGE, Hubert
F-38100 Grenoble (FR)**
• **MAEDER, Catherine
F-38240 Meylan (FR)**

(74) Mandataire: **Signore, Robert et al
c/o BREVATOME
25, rue de Ponthieu
75008 Paris (FR)**

(56) Documents cités:
**EP-A- 0 087 665          EP-A- 0 265 090
EP-A- 0 314 541          EP-A- 0 451 636
US-A- 4 821 011          US-A- 4 839 708
US-A- 4 876 893**

• PATENT ABSTRACTS OF JAPAN vol. 4, no. 58
(P-9)30 Avril 1980 & JP-A-55 029 756 ( TOKYO
ELECTRIC CO.LTD.) 3 Mars 1980.
• PATENT ABSTRACTS OF JAPAN vol. 9, no. 208
(E-338)24 Août 1985 & JP-A-60 072 242
( FUJITSU K.K.) 24 Avril 1985.
• PATENT ABSTRACTS OF JAPAN vol. 12, no. 245
(P-729)12 Juillet 1988 & JP-A-63 037 227
( TERAOKA SEIKO CO. LTD.) 17 Février 1988.
• PATENT ABSTRACTS OF JAPAN vol. 15, no. 331
(P-1241)22 Août 1991 & JP-A-31 22 504 ( ASAHI
CHEM. IND. CO. LTD.) 24 Mai 1991.

EP 0 604 628 B1

## Description

La présente invention concerne une jauge de contrainte sur support souple, ainsi qu'un capteur muni de ladite jauge.

Les jauges de contraintes disposées sur un support souple sont utilisées pour mesurer les déformations de pièces mécaniques. Leurs applications sont multiples. Elles sont utilisées notamment pour le pesage, (balances commerciales et pèse-personnes par exemple), pour les mesures de pression, pour les mesures de contraintes sur des pièces mécaniques telles que des arbres de transmission, différentes parties d'une aile d'avion ou des concavités. Elles sont également utilisées en extentiométrie pour le contrôle de structures en béton, telles que des barrages ou des ponts. Enfin, ces jauges peuvent également permettre d'effectuer des mesures de torsion, de couple, de vibrations ou d'accélération.

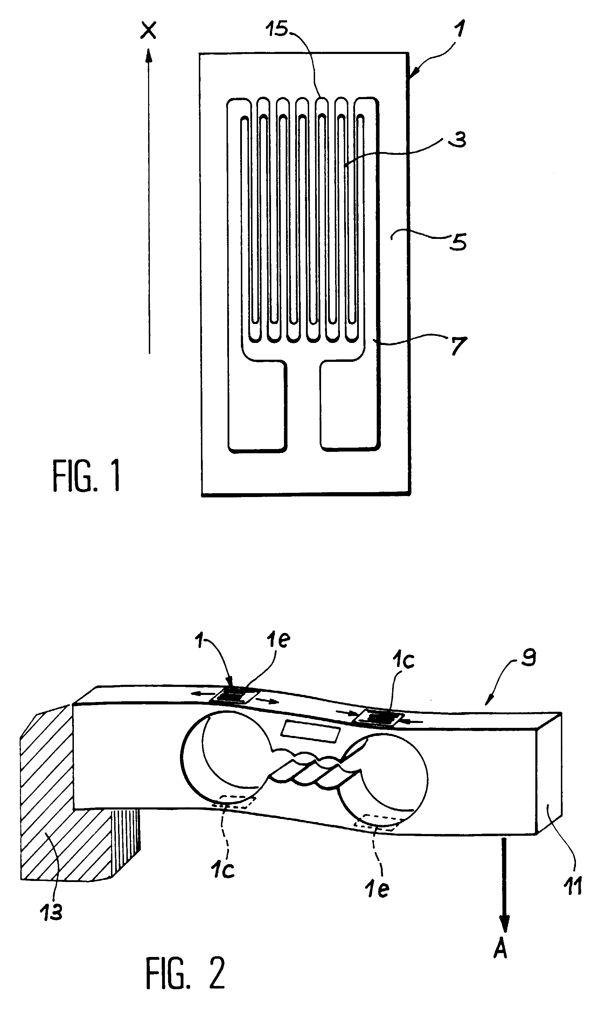

Sous sa forme la plus simple, la jauge 1 est constituée par un brin très fin 3 collé sur un support mince 5 et arrangé suivant une forme en boucles représentée à la figure 1 jointe, c'est-à-dire que la majeure partie de sa longueur est distribuée parallèlement à une direction fixe (flèche X). Des brins plus gros 7 servent à souder les sorties, à des câbles de liaison aux instruments.

Lorsqu'on désire connaître l'allongement d'une structure suivant une direction donnée, on colle la jauge 1, les brins parallèles à cette direction.

D'autre part, les jauges 1 servent à réaliser des capteurs 9 tel que celui illustré en figure 2 jointe. Un capteur est un dispositif mécanique destiné à transformer une grandeur physique quelconque A (pression, force, accélération, etc...) en déformation d'une pièce 11 dite corps d'épreuve. Les jauges collées sur le corps d'épreuve détectent ses déformations, en vue de la mesure de la grandeur physique A ou pour agir sur des dispositifs régulateurs.

Dans le cas illustré en figure 2, les deux jauges lc travaillent en compression et les deux jauges le en extension. Ceci permet d'avoir des mesures très précises de l'ordre de $10^{-4}$ de l'étendue de la mesure. Le même montage peut être effectué sur toutes sortes de structures, comme cela est décrit dans "L'encyclopédie Vishay d'analyse des contraintes", Vishay-Micromesures, Malakoff, France, 282-284.

Enfin, les jauges peuvent être disposées en forme de pont de Wheatsone, comme cela est décrit dans le brevet EP-0 053 059, par exemple.

Quelle que soit la disposition des jauges de contrainte, les mesures effectuées sont toutes basées sur les variations de résistance du brin 3, ces variations étant fonction de la nature du matériau le constituant et de ses formations en longueur et en section.

On connaît déjà d'après le brevet EP-A-0 053 059 une jauge de contrainte, réalisée par dépôt sous vide d'une couche d'alliage métallique de 50 à 500 nm sur un substrat en verre de 100 à 250 μm d'épaisseur. Or, le verre est extrêmement cassant et difficile à utiliser dans certains cas. En conséquence, cette jauge peut être utilisée uniquement en compression et non en traction à cause de la limite de rupture du verre.

On connaît également d'après l'art antérieur des jauges de contraintes destinées à être utilisées en compression et en extension et fixées à cet effet sur un support souple. Ces jauges comprennent un film mince de polyimide ou de résine époxy phénolique, d'une épaisseur de 25 μm, sur lequel on colle une feuille très mince d'environ 5 μm d'un matériau résistif laminé tel qu'un alliage de nickel-chrome, de cuivre-nickel ou de platine-tungstène.

Dans ce cas, la couche résistive est ensuite gravée en fines bandes pour obtenir une résistance dont la forme est donnée sur la figure jointe. Les résistances ainsi obtenues peuvent présenter des valeurs comprises entre 120 et 6000 ohms.

Ce type de jauge présente un certain nombre d'inconvénients. La fabrication de ces jauges est onéreuse car le collage des feuilles très minces de matériau résistif est une opération délicate et difficilement reproductible. En outre, la fabrication des feuilles métalliques de 5 μm d'épaisseur est longue et difficile, elle nécessite une succession de laminages et de recuits qui stabilisent le matériau entre chaque étape de laminage. Enfin, l'épaisseur de la couche résistive métallique de 5 μm limite les valeurs des résistances obtenues qui ne sont généralement pas supérieures à 6000 ohms.

On connaît également d'après le brevet US-4,786,887, une jauge comprenant un substrat souple recouvert d'une couche isolante polymère et d'une couche résistive en alliage nickel-chrome, une couche conductrice d'or étant en outre déposée uniquement sur les pattes de sortie pour former des plots de contact. Ce document propose d'ajuster le fluage du corps d'épreuve en modifiant les caractéristiques de la couche isolante.

Le document EP-A-0 087 665 décrit une jauge de contrainte pour un capteur de pression. Ce capteur comprend :

- une poutre soumise aux déformations et recouverte d'une résine isolante comprenant une charge de poudre de silice,
- une résistance formée sur ladite couche de résine et réalisée en nickel chrome, et enfin
- une couche d'or recouvrant partiellement ladite résistance.

Ce document décrit en fait une résistance monocouche puisque les parties en forme de résistance ne comprennent qu'une seule couche d'alliage Ni-Cr et pas de couche d'or supplémentaire.

Par ailleurs, on notera que sous l'action d'une force constante, le corps d'épreuve 11 et la jauge 1 se déforment instantanément à l'instant d'application de ladite force, puis ils continuent à se déformer progressivement au cours du temps, c'est le phénomène dit de "fluage". Lorsque la force est enlevée du corps d'épreuve 11, celui-ci revient à sa position initiale. La valeur de fluage se mesure en faisant le rapport entre la variation de longueur de l'élément soumis au fluage et sa longueur initiale.

De même, après la déformation instantanée de la jauge 1 qui suit celle du corps d'épreuve 11, la jauge 1 est soumise à une force qui tend à s'opposer à cette déformation, c'est le phénomène dit de "relaxation". Celui-ci correspond à une diminution de la contrainte qui s'exerce sur la jauge quand la déformation est maintenue constante.

De manière générale, une jauge 1 fixée sur un corps d'épreuve 11 sur lequel on applique une charge A, est soumise à trois déformations différentes :

- une déformation instantanée correspondant à l'application de la charge,
- une déformation due au fluage du corps d'épreuve, et
- une déformation due à sa relaxation propre.

Le résultat de la mesure effectuée à l'aide de la jauge correspond à la résultante de ces trois déformations. Toutefois, les caractéristiques du fluage ou de la relaxation sont adaptées en fonction des applications des jauges.

Dans le cas de la jauge de contrainte représentée sur les figures 1 et 2, la transmission des déformations du corps d'épreuve 11, à la jauge 1, se fait surtout par cisaillement des boucles 15 de raccordement entre les brins 3 successifs, au niveau des extrémités de celles-ci.

Lorsque l'on souhaite mesurer l'évolution du fluage d'une structure sous charge constante, telle qu'un pont par exemple, la jauge doit être sans relaxation. Or, la relaxation de la jauge 1 dépend de la longueur des boucles 15 ; plus les boucles 15 sont courtes et plus la relaxation de la jauge est importante. On adapte donc la relaxation de la jauge en choisissant la longueur des boucles. Cela impose de calculer avant la fabrication, la longueur des boucles, pour chaque corps d'épreuve utilisé. Il est alors nécessaire d'avoir un dessin de jauge par corps d'épreuve et un masque de gravure par corps d'épreuve. Le procédé de fabrication est donc onéreux.

On notera que dans le brevet EP-A-0 053 059, il n'est pas fait allusion au problème du réglage du fluage, car l'application visée est principalement destinée au pesage grand public (balances de ménage, pèse-personnes), où la précision exigée est moindre que dans les mesures de pesage effectuées dans le secteur professionnel. Pour les capteurs grand public, les erreurs dues au fluage sont comprises dans les tolérances de mesure.

En revanche, lorsque l'on utilise les jauges pour un pesage précis, le dessin de la jauge 1 doit permettre d'avoir une relaxation qui compense parfaitement le fluage du corps d'épreuve 11 de façon à avoir un signal de sortie constant. Une telle précision est nécessaire pour que l'indication de poids soit constante quelle que soit la durée du pesage.

On connaît également d'après le brevet US-A-4 876 893 une jauge de contrainte pour capteur de pression. Cette jauge comprend une plaque de base électriquement isolante (verre ou métal isolé), recouverte d'un unique film mince d'alliage. La composition préférentielle de cet alliage est la suivante: $(Ni_aCr_{100-a})_{100-b}Si_b$, avec $\underline{a}$ compris entre 40 et 60% et $\underline{b}$ entre 3 et 8% en poids. Ce document n'aborde absolument pas le problème dufluage.

D'une manière générale, les phénomènes de fluage et de relaxation sont peu importants à température ambiante, mais peuvent ne plus être négligeables lorsque le corps d'épreuve et/ou la colle liant la jauge audit corps sont chauffés à des températures proches de leurs limites d'emploi. On réduit cet effet en faisant subir à l'ensemble un traitement thermique, à une température supérieure à celle de l'utilisation ultérieure. Ceci est important, surtout sur les capteurs qui souvent doivent avoir une fidélité meilleure que 0,1%. Toutefois, ces traitements thermiques sont coûteux.

Par ailleurs, il est possible que le corps d'épreuve 11 ait un coefficient de dilatation très différent de celui de la jauge 1. Le collage ayant été définitif à la température de traitement de la colle, lorsqu'on revient à la température ambiante, la jauge est soumise à une déformation. Le vrai zéro ne correspond donc pas au cas d'absence de charge, mais à celui d'une charge qui retrouve les conditions du collage. Ainsi, certaines installations fluent en l'absence de charge, mais pas pour une déformation donnée.

Enfin, on sait qu'une résistance peut varier en fonction de la température selon la formule ci-dessous :

$$R = Ro\,(1+\alpha T)$$

dans laquelle Ro représente la valeur de la résistance de la jauge à une température de référence, T représente la température à l'instant de la mesure et $\alpha$ représente le coefficient de température de la résistance (TCR) du matériau dans lequel est réalisé la résistance (brins 3). Lorsque le TCR est proche de 0, la valeur de la résistance ne varie pas en fonction de la température.

Il serait donc souhaitable de réaliser des jauges dans des matériaux dont le TCR est voisin de zéro.

De la maîtrise de ces phénomènes de fluage dépendent en grande partie les qualités métrologiques d'une jauge et d'un capteur.

En conséquence, l'invention a pour objet de remédier aux inconvénients précités et notamment de permettre l'adaptation du fluage de la jauge à différents corps d'épreuve, tout en conservant un coefficient de température de la résistance proche de zéro et surtout sans avoir à modifier le dessin du masque permettant la réalisation des boucles, pour chaque corps d'épreuve.

A cet effet, l'invention concerne une jauge de contrainte destinée à être fixée sur l'une des faces d'un corps d'épreuve pouvant se déformer sous l'action d'une grandeur à mesurer, cette jauge comprenant une couche mince sensible aux déformations gravée en forme de résistance et fixée sur un support souple.

Selon les caractéristiques de l'invention, ladite couche mince comprend sur toute sa surface au moins deux sous-couches présentant des valeurs de fluage différentes.

De façon avantageuse, la couche mince a une structure multicouches comprenant plusieurs couches présentant des valeurs de fluage différentes et des épaisseurs différentes.

Ainsi, il est possible d'adapter le degré de relaxation ou de fluage des jauges en faisant varier la nature des couches minces, leur nombre et leur épaisseur.

De façon avantageuse, l'une des sous-couches présente une valeur de fluage positive, il s'agit d'un alliage à l'état amorphe, présentant un TCR voisin de zéro, tandis que l'autre sous-couche présente une valeur de fluage négative, il s'agit d'un alliage à l'état cristallin, dont le TCR est également voisin de zéro.

L'invention concerne également un capteur de mesure d'une grandeur. Selon les caractéristiques de l'invention, il comprend au moins une jauge de contrainte selon l'invention fixée sur un corps d'épreuve pouvant se déformer sous l'action de ladite grandeur à mesurer.

L'invention sera mieux comprise à la lecture de la description suivante d'un mode de réalisation de l'invention donnée à titre d'exemple purement illustratif et non limitatif, cette description étant faite en faisant référence aux dessins joints, dans lesquels :

- la figure 1 est un schéma illustrant une jauge de contrainte selon l'art antérieur, en vue de dessus,
- la figure 2 est une vue en perspective d'un capteur comprenant plusieurs jauges de l'art antérieur,
- la figure 3 est une vue partielle, en perspective, d'un mode de réalisation d'une jauge de contrainte selon l'invention, et
- la figure 4 est une courbe illustrant le fluage en fonction du temps, pour des jauges de contrainte réalisées selon l'invention et des jauges témoins.

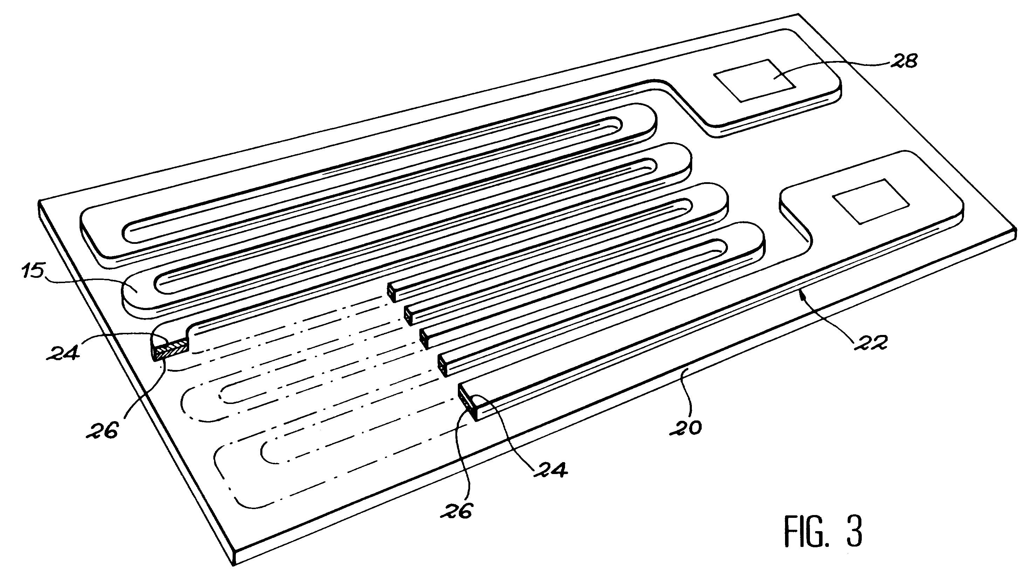

Selon un premier mode de réalisation de l'invention, la jauge de contrainte illustrée en figure 3 présente une forme allongée, identique à celle qui a été décrite en détail en figure 1 dans l'introduction.

Cette jauge de contrainte comprend un support souple 20 réalisé de préférence en un polymère thermodurcissable, et résistant à des températures au moins égales à 400°C environ, tel qu'un polyimide.

Ce support souple 20 est recouvert d'une couche mince 22 sensible aux déformations. Cette couche 22 présente la forme de la résistance décrite pour la figure 1. Selon les caractéristiques de l'invention, elle comprend sur toute sa surface au moins deux sous-couches 24, 26 présentant des valeurs de fluage différentes.

La première sous-couche 26 est de préférence réalisée dans un alliage présentant une valeur de fluage positive, et se trouvant à l'état amorphe. Cette sous-couche mince est réalisée dans un matériau choisi parmi les alliages à base de nickel-chrome, platine-tungstène ou cuivre-nickel. De façon avantageuse, l'alliage comprend du nickel, du chrome et du silicium. Plus précisément, il présente la formule suivante : $Ni_xCr_ySi_z$ avec $5 < z < 11$ et $x+y+z=100$. Plus précisément encore, il comprend en poids, environ 72% de nickel, 18% de chrome et 10% de silicium. Son coefficient de température de résistance (TCR) est voisin de 0.

La deuxième sous-couche 24 est de préférence constituée d'un alliage présentant une valeur de fluage négative, c'est-à-dire qui entraîne une relaxation importante de la jauge par rapport au corps d'épreuve sur lequel elle est placée. De préférence, cet alliage est à l'état cristallin. Il est choisi parmi les alliages à base de nickel-chrome, platine-tungstène ou cuivre-nickel. De façon avantageuse, il est constitué par du constantan, c'est-à-dire un alliage comprenant en poids, environ 55% de cuivre, 44% de nickel et 1% de manganèse. Son coefficient de température de résistance (TCR) est voisin de zéro.

Il est possible d'utiliser deux types de constantan, dopés par plusieurs impuretés dont les principales sont données dans le tableau 1 ci-dessous. Il serait également possible d'utiliser comme dopant du zinc, de l'argent ou du titane.

Tableau 1

|  | constantan n° 1 (μg/g) | constantan n° 2 (μg/g) |
|---|---|---|
| Ca | 935 | 500 |
| Pb | 200 | 175 |
| Si | 200 | 25 |
| Fe | 420 | 215 |
| Al | 60 | 25 |
| Mg | 55 | 615 |

Le premier alliage de constantan (n°1) possède un TCR voisin de 0. Le deuxième alliage de constantan (n° 2) présente un TCR plus grand mais une relaxation plus faible.

Un alliage de constantan présentant un faible taux d'impuretés a un TCR plus élevé et inversement. On adaptera donc la quantité de dopants présents dans l'alliage en fonction du TCR recherché.

De façon avantageuse et comme cela a été représenté en figure 3, on dépose de préférence la sous-couche 26 d'alliage à l'état amorphe directement sur le support souple 20, puis ensuite la sous-couche 24 sur la sous-couche 26. Il est également possible de faire le contraire mais les résultats obtenus sont moins homogènes.

On notera qu'il n'est pas impératif que l'une des sous-couches ait une valeur de fluage positive et l'autre une valeur négative, mais qu'il suffit simplement que ces valeurs soient différentes.

Le degré de fluage de la jauge ou plus exactement de la couche mince 22 dépend non seulement de la valeur du fluage relatif à chacune des sous-couches 24, 26, mais également de l'épaisseur relative et du nombre de sous-couches 24, 26. Les essais décrits ci-après ont été effectués avec trois et cinq couches.

Le procédé de fabrication des jauges va maintenant être décrit plus en détail. Des dépôts multicouches d'alliages amorphe (NiCrSi) et cristallin (CuNiMn) ont été effectués par pulvérisation cathodique à diode continue, sur un support souple 20 de polyimide de 25 μm d'épaisseur. Ce type de procédé de dépôt explique que le polymère polyimide doive résister à des températures voisines de 400°C ou plus, atteintes lors de l'élaboration des couches minces. Bien entendu, cette valeur de température peut êtra abaissée par adjonction de systèmes réfrigérants au dispositif de dépôt. Le choix du polymère dépend de la température atteinte lors du dépôt des couches minces. Ce choix est alors à la portée de l'homme de l'art.

Ces techniques de dépôts de couches minces permettent de déposer des couches présentant des épaisseurs comprises $50.10^{-10}$m et $10000.10^{-10}$m et d'avoir des résistances très élevées par unité de longueur. Ensuite, les résistances sont gravées par attaque chimique en suivant la géométrie de la figure 1 ou 3, avec un seul masque pour les différences multi-couches, (c'est-à-dire une longueur de boucle 15 unique). Ensuite, par exemple les plots de connexion 28 sont déposés à travers un masque aux deux extrémités de chaque jauge, par évaporation sous vide d'une épaisseur de 100 Å de chrome, 3000 Å de nickel et 3000 Å d'or. Enfin, les jauges obtenues sont collées sur le corps d'épreuve de façon à former un capteur. Elles peuvent être disposées comme illustré sur la figure 2 en forme de pont de Wheastone. Des fils de connexion sont ensuite soudés aux plots de connexion, au fer à souder, avec un alliage étain-plomb, par exemple.

**Test effectué sur les jauges de contrainte présentant la structure conforme à l'invention**

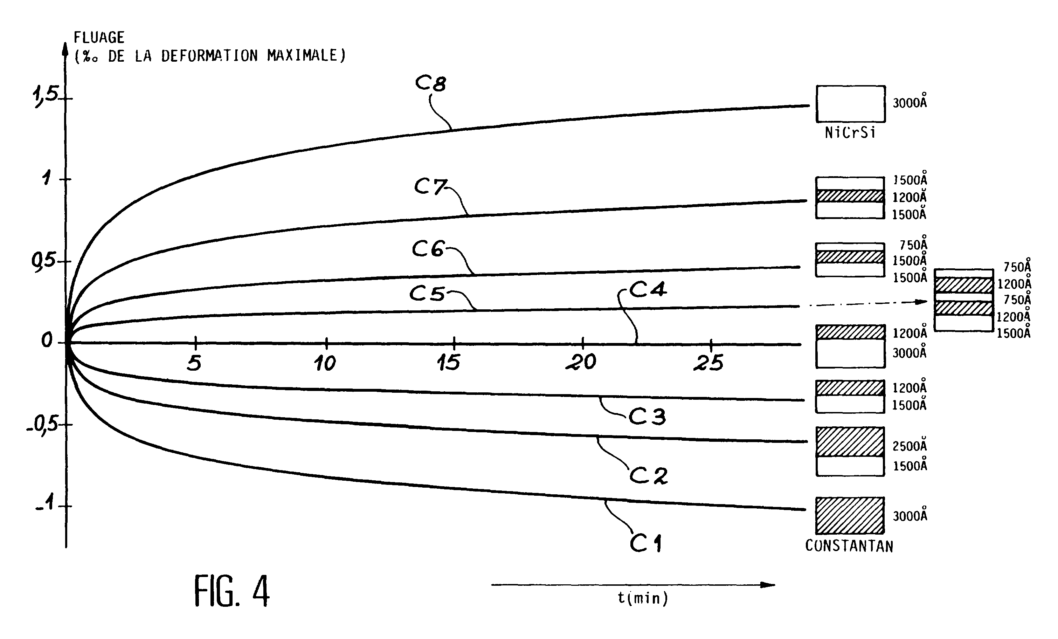

Les jauges ont été installées sur un corps d'épreuve selon une disposition en pont de Wheastone. Le corps d'épreuve est destiné à un pesage effectué entre 0 et 3 kg. Ce corps d'épreuve présente un fluage de valeur intermédiaire par rapport à tous les corps d'épreuve utilisés généralement dans le pesage. La figure 4 illustre les mesures effectuées en appliquant une charge maximum et en faisant des relevés du déséquilibre du pont de Wheatsone pendant 30 minutes. Les courbes représentent le fluage (c'est-à-dire la déformation en ‰ de la déformation maximale), en fonction du temps. Les essais ont été effectués avec une jauge comprenant un support souple en polyimide recouvert d'une ou de plusieurs sous-couches de NiCrSi amorphe ou de constantan cristallin. En face de chaque courbe, on a également représenté la section correspondante de la jauge sans la couche support 20 et les épaisseurs relatives du constantan et de l'alliage NiCrSi.

La courbe CI représente la résultante obtenue avec une couche de constantan seule et forme un témoin. Le fluage est de $-1.10^{-3}$ après 30 minutes.

Les courbes C2, C3 et C4 montrent la diminution de l'effet de relaxation (augmentation de la valeur du fluage) due à l'augmentation d'épaisseur de la sous-couche de NiCrSi, par rapport à celle du constantan. La courbe C4 correspond à un fluage de la jauge qui compense exactement le fluage du corps d'épreuve.

Les courbes C5, C6 et C7 représentent les résultats décalés vers des valeurs positives de fluage, obtenues avec des sous-couches alternées d'alliage NiCrSi et de constantan. On notera que les mêmes courbes pourraient être obtenues avec uniquement deux sous-couches, en augmentant l'épaisseur de l'alliage NiCrSi par rapport à celle du constantan.

Enfin, à titre de comparaison, la courbe C8 montre le fluage du corps d'épreuve obtenu avec une couche d'alliage NiCrSi seule. Cette valeur est de $1,4.10^{-3}$ après 30 minutes. Dans ce cas, la couche métallique suit parfaitement le corps d'épreuve et la jauge n'a pas de relaxation.

Les jauges de contrainte selon l'invention trouvent une application particulière dans le pesage de précision pour les balances poids/prix.

En fonction des applications particulières réalisées et notamment de la valeur de fluage souhaitée, on choisira le nombre et l'épaisseur des différentes sous-couches d'alliage.

## Revendications

1.  Jauge de contrainte destinée à être fixée sur l'une des faces d'un corps d'épreuve pouvant se déformer sous l'action d'une grandeur à mesurer, cette jauge comprenant une couche mince (22) sensible aux déformations, gravée en forme de résistance et fixée sur un support souple (20), caractérisée en ce que ladite couche mince (22) comprend sur toute sa surface au moins deux sous-couches (24, 26) présentant des valeurs de fluage différentes.

2.  Jauge de contrainte selon la revendication 1, caractérisée en ce que l'une des sous-couches est constituée d'un alliage (26) présentant une valeur de fluage positive et l'autre sous-couche d'un alliage (24) présentant une valeur de fluage négative.

3.  Jauge de contrainte selon la revendication 2, caractérisée en ce que l'alliage présentant une valeur de fluage négative (24) est un alliage à l'état cristallin.

4.  Jauge de contrainte selon la revendication 2, caractérisée en ce que l'alliage présentant une valeur de fluage positive (26) est un alliage à l'état amorphe.

5.  Jauge de contrainte selon la revendication 3 ou 4, caractérisée en ce que l'alliage à l'état cristallin (24) et l'alliage à l'état amorphe (26) sont choisis parmi des alliages à base de nickel-chrome, platine-tungstène ou cuivre-nickel.

6.  Jauge de contrainte selon la revendication 3 ou 4, caractérisée en ce que l'alliage présente un coefficient de température de résistance voisin de 0.

7.  Jauge de contrainte selon les revendications 4 et 5, caractérisée en ce que l'alliage présentant une valeur de fluage positive (26) est un alliage de composition $Ni_xCr_ySi_z$ avec $5 < z < 11$, $x+y+z=100$.

8.  Jauge de contrainte selon la revendication 7, caractérisée en ce que l'alliage (26) comprend en poids environ 72% de nickel, 18% de chrome et 10% de Si.

9.  Jauge de contrainte selon la revendication 3, caractérisée en ce que l'alliage (24) présentant une valeur de fluage négative est un alliage de cuivre, nickel, manganèse.

10. Jauge de contrainte selon la revendication 9, caractérisée en ce que l'alliage (24) comprend en poids, environ 55% de cuivre, 44% de nickel et 1% de manganèse.

11. Jauge de contrainte selon la revendication 3 ou 5, caractérisée en ce que l'alliage (24) présentant une valeur de fluage négative est dopé avec un élément choisi parmi le calcium, le plomb, le silicium, le fer, l'aluminium, le magnésium, le zinc, l'argent ou le titane.

12. Jauge de contrainte selon l'une quelconque des revendications précédentes, caractérisée en ce que le support souple (20) est réalisé dans un polyimide résistant à des températures supérieures ou égales à 400°C environ.

13. Jauge de contrainte selon l'une quelconque des revendications 2 à 12, caractérisée en ce que la sous-couche (26) d'alliage présentant une valeur de fluage positive est au contact direct du support souple (20).

14. Jauge de contrainte selon l'une quelconque des revendications précédentes, caractérisée en ce que chaque sous-couche (24, 26) présentant des valeurs de fluage différentes, a une épaisseur comprise entre $50.10^{-10}$m et $10000.10^{-10}$m.

15. Jauge de contrainte selon l'une quelconque des revendications précédentes, caractérisée en ce que la couche mince (22) a une structure multicouches comprenant plusieurs sous-couches (24, 26) présentant des valeurs de fluage différentes et des épaisseurs différentes.

16. Capteur de mesure d'une grandeur, caractérisé en ce qu'il comprend au moins une jauge de contraire selon l'une quelconque des revendications 1 à 15, fixée sur un corps d'épreuve (11) pouvant se déformer sous l'action de ladite grandeur à mesurer.

**Patentansprüche**

1. Dehnungsmeßstreifen zum Festmachen auf einer der Flächen eines Probe- bzw. Prüfkörpers, der sich unter der Wirkung einer zu messenden Größe verformen kann, wobei dieser Meßstreifen eine dünne, auf Verformungen ansprechende Schicht (22) umfaßt, geätzt in Form eines Widerstands und befestigt auf einem biegsamen Träger (20),
**dadurch gekennzeichnet,**
daß besagte dünne Schicht (22) über ihre gesamte Oberfläche wenigstens zwei Unterschichten (24, 26) umfaßt, die unterschiedliche Kriech- bzw. Fließwerte aufweisen.

2. Dehnungsmeßstreifen nach Anspruch 1, dadurch gekennzeichnet, daß eine der Unterschichten gebildet wird durch eine Legierung (26), die einen positiven Fließwert aufweist, und die andere Unterschicht durch eine Legierung (24), die einen negativen Fließwert aufweist.

3. Dehnungsmeßstreifen nach Anspruch 2, dadurch gekennzeichnet, daß die einen negativen Fließwert aufweisende Legierung (24) eine Legierung im kristallinen Zustand ist.

4. Dehnungsmeßstreifen nach Anspruch 2, dadurch gekennzeichnet, daß die einen positiven Fließwert aufweisende Legierung (26) eine Legierung im amorphen Zustand ist.

5. Dehnungsmeßstreifen nach Anspruch 3 oder 4, dadurch gekennzeichnet, daß die Legierung im kristallinen Zustand (24) und die Legierung im amorphen Zustand (26) ausgewählt werden unter den Legierungen auf der Basis von Nickel-Chrom, Platin-Wolfram oder Kupfer-Nickel.

6. Dehnungsmeßstreifen nach Anspruch 3 oder 4, dadurch gekennzeichnet, daß die Legierung einen Widerstandstemperaturkoeffizienten nahe 0 aufweist.

7. Dehnungsmeßstreifen nach einem der Ansprüche 4 und 5, dadurch gekennzeichnet, daß die Legierung mit dem positiven Fließwert (26) eine Legierung der Zusammensetzung $Ni_xCr_ySi_z$ mit $5<z<11$ und $x+y+z=100$ ist.

8. Dehnungsmeßstreifen nach Anspruch 7, dadurch gekennzeichnet, daß die Legierung (26) in Gewichtsanteilen etwa 72% Nickel, 18% Chrom und 10% Si enthält.

9. Dehnungsmeßstreifen nach Anspruch 3, dadurch gekennzeichnet, daß die einen negativen Fließwert aufweisende Legierung (24) eine Kupfer-, Nickel-, Mangan-Legierung ist.

10. Dehnungsmeßstreifen nach Anspruch 9, dadurch gekennzeichnet, daß die Legierung (24) in Gewichtsanteilen etwa 55% Kupfer, 44% Nickel und 1% Mangan enthält.

11. Dehnungsmeßstreifen nach Anspruch 3 oder 5, dadurch gekennzeichnet, daß die einen negativen Fließwert aufweisende Legierung (24) dotiert ist mit einem Element, ausgewählt unter Calcium, Blei, Silicium, Eisen, Aluminium, Magnesium, Zink, Silber oder Titan.

**12.** Dehnungsmeßstreifen nach einem der vorangehenden Ansprüche, dadurch gekennzeichnet, daß der biegsame Träger (20) aus einem Polymid hergestellt ist, das Temperaturen höher oder gleich ungefähr 400°C aushält.

**13.** Dehnungsmeßstreifen nach einem der Ansprüche 2 bis 12, dadurch gekennzeichnet, daß die einen positiven Fließwert aufweisende Legierungs-Unterschicht (26) in direktem Kontakt ist mit dem biegsamen Träger (20).

**14.** Dehnungsmeßstreifen nach einem der vorangehenden Ansprüche, dadurch gekennzeichnet, daß jede der unterschiedliche Fließwerte aufweisenden Unterschichten (24, 26) eine Dicke zwischen $50.10^{-10}$m und $10000.10^{-10}$m hat.

**15.** Dehnungsmeßstreifen nach einem der vorangehenden Ansprüche, dadurch gekennzeichnet, daß die dünne Schicht (22) eine Vielschichtenstruktur hat, mehrere Unterschichten (24, 26) umfassend, die verschiedene Fließwerte und verschiedene Dicken aufweisen.

**16.** Meßfühler einer Größe, dadurch gekennzeichnet, daß er wenigstens einen Dehnungsmeßstreifen nach einem der Ansprüche 1 bis 15 umfaßt, festgemacht auf einem Prüfkörper (11), der sich unter der Wirkung von besagter, zu messender Größe verformen kann.

## Claims

**1.** Strain gauge for fixing to one of the faces of a test body able to deform under the action of a quantity to be measured, said gauge having a thin film (22) sensitive to deformations, etched in resistor form and fixed to a flexible support (20), characterized in that said thin film (22) has over its entire surface at least two underlying films (24, 26) having different creep values.

**2.** Strain gauge according to claim 1, characterized in that one of the underlying films is constituted by an alloy (26) having a positive creep value and the other underlying film of an alloy (24) having a negative creep value.

**3.** Strain gauge according to claim 2, characterized in that the alloy having a negative creep value (24) is an alloy in the crystalline state.

**4.** Strain gauge according to claim 2, characterized in that the alloy having a positive creep value (26) is an alloy in the amorphous state.

**5.** Strain gauge according to claim 3 or 4, characterized in that the alloy in the crystalline state (24) and the alloy in the amorphous state (26) are chosen from among alloys based on nickel-chromium, platinum-tungsten or copper-nickel.

**6.** Strain gauge according to claim 3 or 4, characterized in that the alloy has a temperature coefficient of resistance close to 0.

**7.** Strain gauge according to claims 4 and 5, characterized in that the alloy having a positive creep value (26) is an alloy of composition $Ni_xCr_ySi_z$ with $5 < z < 11$, $x+y+z = 100$.

**8.** Strain gauge according to claim 7, characterized in that the alloy (26) has by weight approximately 72% nickel, 18% chromium and 10% Si.

**9.** Strain gauge according to claim 3, characterized in that the alloy (24) having a negative creep value is a copper, nickel and manganese alloy.

**10.** Strain gauge according to claim 9, characterized in that the alloy (24) contains by weight approximately 55% copper, 44% nickel and 1% manganese.

**11.** Strain gauge according to claim 3 or 5, characterized in that the alloy (24) having a negative creep value is doped with an element chosen from among calcium, lead, silicon, iron, aluminium, magnesium, zinc, silver or titanium.

**12.** Strain gauge according to any one of the preceding claims, characterized in that the flexible support (20) is made from a polyimide able to resist temperatures equal to or higher than approximately 400°C.

13. Strain gauge according to any one of the claims 2 to 12, characterized in that the alloy underlying film (26) having a positive creep value is in direct contact with the flexible support (20).

14. Strain gauge according to any one of the preceding claims, characterized in that each underlying film (24, 26) having different creep values has a thickness between $50.10^{-10}$m and $10000.10^{-10}$m.

15. Strain gauge according to any one of the preceding claims, characterized in that the thin film (22) has a multifilm structure with several underlying films (24, 26) having different creep values and different thicknesses.

16. Transducer for measuring a quantity, characterized in that it incorporates at least one strain gauge according to any one of the claims 1 to 15, fixed to a test body (11) able to deform under the action of said quantity to be measured.

FIG. 1

FIG. 2

FIG. 3

EP 0 604 628 B1

FIG. 4

EP 0 604 628 B1